# EUROPEAN PATENT APPLICATION

(11) **EP 0 828 374 A2**
(43) Date of publication of application: **11.03.1998**
(21) Application number: 97114403.5
(22) Date of filing: 20.08.1997
(51) Int. Cl.: H04N 1/327

(54) **Facsimile machine**

(30) Priority: 03.09.1996 JP 232799/96
(71) Applicant: SHARP KABUSHIKI KAISHA, Osaka 545 (JP)
(72) Inventor: Tamura, Harumichi, Nara-shi, Nara 631 (JP)
(74) Representative: Müller, Frithjof E., Dipl.-Ing.

(57) **Abstract**

A facsimile machine (20) has a calling-side/called-side judging unit (14) for judging whether the facsimile machine is a calling side or a called side, a handset (7) for sending and receiving sound through a communications network, a speaker (5) capable of outputting a ring tone for calling up the operator while converting electric signals supplied from the communications network into sound and outputting the sound, and a control unit (1) for controlling the speaker and the handset so as to selectively cause signals supplied from the communications network to be converted into sound and outputted by the speaker after the facsimile transmission or cause a ring tone to be outputted by the speaker after the facsimile transmission, depending on judgment by the calling-side/called-side judging unit. With this arrangement, the facsimile machine is capable of smoothly switching to telephone communication after facsimile transmission without disconnecting from the communications network.

## Description

### FIELD OF THE INVENTION

The present invention relates to a facsimile machine having a telephone communication function. More specifically, the present invention relates to a facsimile machine which allows switching from facsimile communication to usual telephone communication without clearing the line forward.

### BACKGROUND OF THE INVENTION

There have been facsimile machines having a telephone communication reservation function whereby switching to telephone communication after end of facsimile communication is ensured by sending/receiving a predetermined reservation signal in advance in a facsimile communication protocol.

However, in order to make the telephone communication reservation, it is required that both the facsimile machines on the sending side and the receiving side should have the telephone communication reservation function. In other words, in the case where the facsimile machine on the receiving side does not have the telephone communication reservation function, the conventional facsimile machine having the telephone communication reservation function on the receiving side cannot carry out the telephone communication reservation. Thus, the conventional facsimile machine has a problem that it is not capable of carrying out the telephone communication reservation with respect to any facsimile machine.

Besides, as to the conventional facsimile machine having the telephone communication reservation function, switching to telephone communication is sometimes failed when an error occurs during facsimile transmission, which ends the communication.

Furthermore, the conventional facsimile machine having the telephone communication reservation function once clears the line forward after completion of facsimile transmission. Therefore, this causes inconvenience to the operator, in the case where the operator intends to carry out telephone communication after the facsimile transmission with the facsimile connected with the line. Such telephone communication is particularly demanded in the case where an error occurs during facsimile transmission and sending/receipt of clear image data is failed.

On sending documents of important issues by facsimile, the operator on the sending side needs to directly talk with the operator on the receiving side after completion of the facsimile transmission to check whether or not the data have been surely received. In this case, with the conventional facsimile machine which ends the communication by clearing the line forward after the completion of the facsimile transmission, the operator on the sending side has to again start communication with the operator on the receiving side by dialing again or the like.

### SUMMARY OF THE INVENTION

The object of the present invention is to provide a facsimile machine which, whether or not the facsimile machine on the receiving side is in accordance with the present invention, enables smooth switching from facsimile communication to telephone communication with the line held, thereby allowing the sender to talk with the receiver over the phone, and which is superior in operability relating to the switching to the telephone communication.

To achieve the aforementioned object, a facsimile machine, for facsimile communication with a facsimile terminal unit through a line (the facsimile terminal unit communicating with the facsimile machine is hereinafter referred to as communication terminal unit), comprises (1) a telephone communication unit for sending and receiving sounds through the line, (2) a first judging unit for judging before facsimile transmission whether the facsimile machine is a calling side or a called side, (3) a ring tone outputting unit for outputting a ring tone so as to call up an operator of the facsimile machine, (4) a line signal monitoring unit for converting electric signals supplied from the line into audible signals and outputting the audible signals, and (5) a control unit for controlling the line signal monitoring unit and the ring tone outputting unit so as to selectively cause the electric signals supplied from the line to be converted into sound and outputted by the line signal monitoring unit after the facsimile transmission, or cause the ring tone to be outputted by the ring tone outputting unit after the facsimile transmission, depending on judgement by the first judging unit.

With the aforementioned arrangement, depending on whether the facsimile machine called the communication terminal unit or the facsimile machine was called by the communication terminal unit before the facsimile transmission, it is decided whether (i) the signals supplied through the line are converted into sound and outputted by the line signal monitoring unit after the facsimile transmission or (ii) the ring tone is outputted by the ring tone outputting unit. By doing so, the operator on the calling side does not have to operate the telephone communication unit such as a handset until the operator on the called side answers the telephone, and the operator on the called side can be smoothly called up with the use of the ring tone.

Therefore, the facsimile machine of the aforementioned arrangement is capable of carrying out the switching to telephone communication after the facsimile transmission with the line not disconnected, whether or not the communication terminal unit is also in accordance with the present invention. Besides, the facsimile machine of the present invention is superior in operability on the switching to telephone communication.

The aforementioned facsimile machine preferably further comprises a clear-back detecting unit for detecting that the communication terminal unit in communication with the facsimile machine clears the line back, wherein in the case where the clear-back detecting unit detects that the communication terminal unit clears the line back, while the control unit causes the line signal monitoring unit to convert the electric signals supplied from the line into sound and output the sound, or while the control unit causes the ring tone outputting unit to output the ring tone, the control unit causes the line signal monitoring unit or the ring tone outputting unit to suspend the monitoring of the line signals or the output of the ring tone, and clears the line forward.

With the aforementioned arrangement, the facsimile is automatically disconnected from the network in the case where the facsimile machine detects a busy tone or the like and judges that the communication terminal unit clears the line back. Therefore, the operator does not have to bother to carry out an operation for clearing the line.

The facsimile machine preferably further comprises a time measuring unit for measuring a time elapse since the output of sound by the line signal monitoring unit or the output of the ring tone by the ring tone outputting unit started, wherein the control unit causes the line signal monitoring unit or the ring tone outputting unit to suspend the monitoring of the signals or the output of the ring tone, and clears the line forward, when the time elapse reaches a predetermined period of time.

With the foregoing arrangement wherein the line is automatically cleared when a predetermined period of time elapses after the facsimile transmission is complete, it is avoidable that the facsimile machine is unnecessary connected with the network and the operator does not have to bother to carry out an operation for clearing the line forward, even in the case where the clear-back by the communication terminal unit is not detected due to troubles of the line or the like, or in the case where the communication terminal unit does not have a function of telephone communication.

Furthermore, to achieve the above object, the facsimile machine of the present invention, for facsimile communication with a communication terminal unit through a line, comprises (1) a telephone communication unit for sending and receiving sound through the line, (2) a second judging unit for judging whether the facsimile machine has sent a facsimile or has received a facsimile, (3) a ring tone outputting unit for outputting a ring tone so as to call up an operator of the facsimile machine, (4) a line signal monitoring unit for converting electric signals supplied from the line into sound and outputting the sound, and (5) a control unit for controlling the line signal monitoring unit and the ring tone outputting unit so as to selectively cause the signals supplied from the line to be converted into sound and outputted by the line signal monitoring unit after the facsimile transmission, or cause the ring tone to be outputted by the ring tone outputting unit after the facsimile transmission, depending on judgment by the second judging unit.

With the aforementioned arrangement, depending on whether the facsimile machine has sent a facsimile or has received a facsimile, it is decided whether (i) the signals supplied through the line are converted into sound and outputted by the line signal monitoring unit after the facsimile transmission or (ii) the ring tone is outputted by the ring tone outputting unit. By doing so, the sender does not have to continue operating the telephone communication unit such as a handset until the receiver answers the telephone, and the receiver can be called up with the use of the ring tone.

Therefore, the facsimile machine of the aforementioned arrangement is capable of carrying out the switching to telephone communication after the facsimile transmission without clearing the line, whether or not the communication terminal unit is also in accordance with the present invention. Besides, the facsimile machine of the present invention is superior in operability on the switching to telephone communication.

For a fuller understanding of the nature and advantages of the invention, reference should be made to the ensuing detailed description taken in conjunction with the accompanying drawings.

### BRIEF DESCRIPTION OF THE DRAWINGS

Figure 1 is a block diagram illustrating a facsimile machine in accordance with one embodiment of the present invention.

Figure 2 is a flowchart of an operation sequence of the facsimile machine in the case where the facsimile machine is a calling side.

Figure 3 is a flowchart of an operation sequence of the facsimile machine in the case where the facsimile machine is a called side.

Figure 4 is an explanatory view illustrating an example of a protocol for communication between the facsimile machine and a communication terminal unit.

Figure 5 is an explanatory view illustrating another example of a protocol for communication between the facsimile machine and the communication terminal unit.

Figure 6 is an explanatory view illustrating still another example of a protocol for communication between the facsimile machine and the communication terminal unit.

Figure 7 is an explanatory view illustrating still another example of a protocol for communication between the facsimile machine and the communication terminal unit.

Figure 8 is an explanatory view illustrating still another example of a protocol for communication between the facsimile machine and the communication terminal unit.

Figure 9 is an explanatory view illustrating still another example of a protocol for communication between the facsimile machine and the communication terminal unit.

Figure 10 is an explanatory view illustrating still another example of a protocol for communication between the facsimile machine and the communication terminal unit.

Figure 11 is a flowchart of an operation sequence of a calling-side/called-side judging unit of the facsimile machine.

### DESCRIPTION OF THE PREFERRED EMBODIMENTS

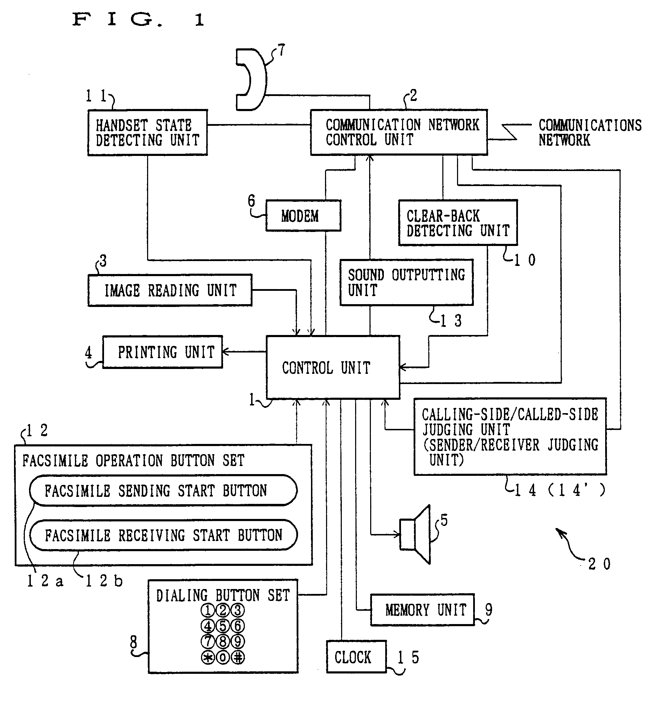

The following description will explain an embodiment of the present invention while referring to Figures 1 through 11.

As illustrated in Figure 1, a facsimile machine 20 of the present invention, connected to a communications network (line) such as telephone lines, has a control unit (control means) 1, a communications network control unit 2, an image reading unit 3, a printing unit 4, a speaker (line signal monitoring means, ring tone outputting means) 5, a modem 6, a handset (telephone communication means) 7 used for receiving and transmitting voice and sound, a dialing button set 8, a memory unit (memory means) 9, a clear-back detecting unit (clear-back detecting means) 10 for detecting it when the line is cleared back, a handset state detecting unit (handset state detecting means) 11 for detecting it when the handset 7 gets off the hook or when it gets on the hook, a facsimile operation button set 12, a sound outputting unit (sound outputting means) 13, and a calling-side/called-side judging unit 14 (first judging means) for judging whether the facsimile machine 20 is a calling side or a called side, prior to facsimile transmission.

Though not shown in the figures, the facsimile machine 20 and a facsimile terminal unit (hereinafter referred to as communication terminal unit) are connected with each other through the communications network. The communication terminal unit may be a facsimile machine of the same arrangement as the facsimile machine 20, or may be a facsimile machine of a different arrangement.

The calling-side/called-side judging unit 14 judges whether facsimile communication has been started by the call of the facsimile machine 20, or it has been started by the call of the communication terminal unit and the facsimile machine 20 receives the call. The calling-side/called-side judging unit 14 sends its judgment to the control unit 1.

The control unit 1 controls an output of the speaker 5 after the end of the facsimile transmission based on the judgment of the calling-side/called-side judging unit 14. The control unit 1 also controls operations of the communications network control unit 2 based on information supplied from the dialing button set 8, the memory unit 9, the clear-back detecting unit 10, the handset state detecting unit 11, and the facsimile operation button set 12. Besides, on receiving a facsimile, the control unit 1 carries out controlling operations so as to cause image data supplied from the modem 6 to be sent to the printing unit 4. On the other hand, on sending a facsimile, the control unit 1 carries out controlling operations so as to cause image data supplied from the image reading unit 3 to be sent to the modem 6. Note that the control unit 1 is connected with a clock (time measuring means) 15. By doing so, a time elapse since output of sound by the speaker 5 started after the end of facsimile transmission is measured.

Based on a control signal supplied from the control unit 1, the communications network control unit 2 connects any one of the modem 6, the handset 7, the speaker 5 (through the control unit 1), and the sound outputting unit 13 with the communications network, or disconnects therebetween, that is, disconnects the modem 6, the handset 7, the speaker 5, or the sound outputting unit 13 from the communications network.

The image reading unit 3 reads an original image and converts it into image data, then, sends the image data to the control unit 1. The printing unit 4 prints an image on a sheet of paper based on the image data supplied from the control unit 1.

The speaker 5 monitors signals sent through the communications network, based on control signals supplied from the control unit 1. To be more specific, the speaker 5 is arranged so that electric signals supplied from the communications network through the communications network control unit 2 and the control unit 1 are converted into sound and the sound are outputted, or so that the ring tone for calling up the operator is outputted. The ring tone outputted from the speaker 5 may be the same as a usual ring tone of a phone bell, but in the case where the ring tone is made different from the usual tone of the phone bell, it is possible to distinguish the ring tone from the tone for informing receipt of usual telephone call.

The modem 6 modulates image data supplied from the control unit 1, while demodulates image data supplied from the communications network control unit 2. The handset 7 has a microphone for converting voice to electric signals and sending the electric signals to the communications network control unit 2, and a speaker for reproducing voice and tones based on electric signals supplied from the communications network control unit 2. The handset 7 is provided so as to freely get on and off the hook in a main body of the facsimile machine.

The dialing button set 8 is used when a phone number is dialed, and signals in accordance with numerals of pushed dialing buttons are sent to the control unit 1 and the modem 6, and to the communications network via the communications network control unit 2. The memory unit 9 stores various settings such as a dialed telephone number of a communication terminal unit, and the content of the memory is read out by the control unit 1. The clear-back detecting unit 10 detects it when the line is cleared by the communication terminal unit during communication, by detecting a busy tone, polarity inversion, or the like, based on signals supplied from the communications network to the communications network control unit 2. The clear-back detecting unit 10 sends the result of detection to the control unit 1. The handset state detecting unit 11 detects a state of the handset 7, whether it gets on or off the hook, and sends the detection result to the control unit 1.

The facsimile operation button set 12 includes a receiving start button with which the operator of the facsimile 20 (hereinafter referred to as operator A) sends the control unit 1 a command for start of receiving a facsimile, and a sending start button with which the operator A sends the control unit 1 a command for start of sending a facsimile. The sound outputting unit 13 sends, through the control unit 1 to the speaker 5, a sound signal (signal for voice message or alarm) informing switching to telephone communication after the completion of the facsimile communication.

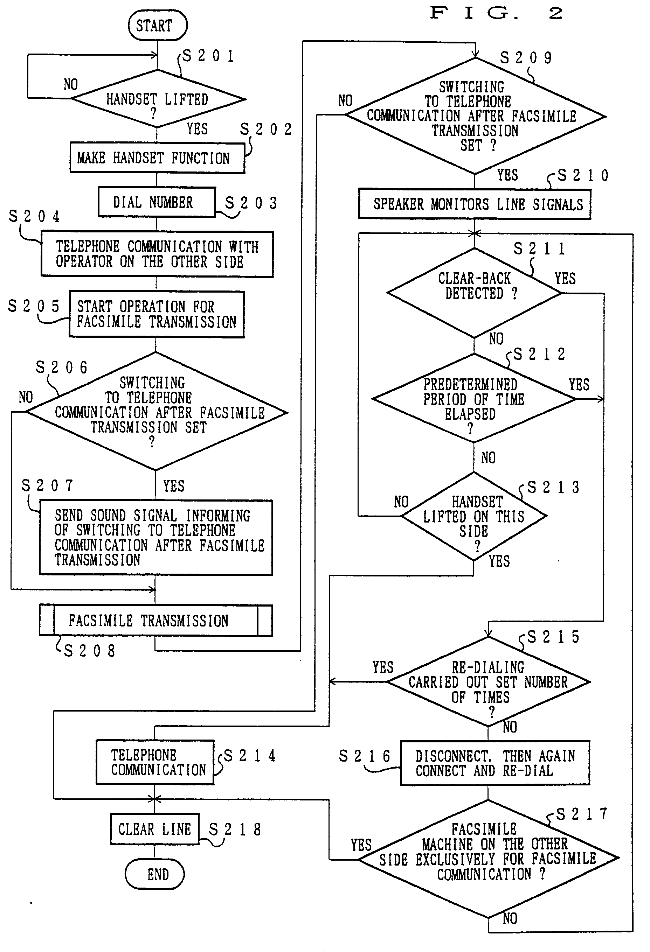

The following description will explain an operation of the facsimile machine 20 in the case where a calling and subsequent facsimile transmission are carried out, while referring to a flowchart of Figure 2.

The handset state detecting unit 11 checks whether or not the handset 7 is off the hook (S201). when the handset state detecting unit 11 detects that the handset 7 is lifted by the operator A thereby becoming off the hook, the control unit 1 commands the communications network control unit 2 to connect the microphone and speaker of the handset 7 with the communications network, so as to cause the handset 7 to function (S202).

When the operator A dials the telephone number of the communication terminal unit by using the dial button set 8, a call signal (16Hz) is sent through the communications network to the communication terminal unit, and an operator of the communication terminal unit (hereinafter referred to as operator B) is called up (S203). The operator A confirms that a handset of the communication terminal unit gets off the hook and then, talks with the operator B through the handset 7 (S204). Thereafter, the operator A replaces the handset 7 and pushes either a facsimile sending start button 12a or a facsimile receiving start button 12b, and the communications network control unit 2 connects the modem 6 with the communication terminal unit through the communications network by a predetermined protocol (S205).

When the modem 6 is connected with the communication terminal unit through the communications network, the control unit 1 checks whether or not the settings for switching to telephone communication after facsimile transmission are selected (S206). In the case where the settings for switching to telephone communication after facsimile transmission are not selected, only facsimile transmission is carried out (S208). Note that the selection of the settings for switching to telephone communication after facsimile transmission is carried out prior to the facsimile communication or during the facsimile communication by the operator A or the operator B, and it is recorded by the memory unit 9.

On the other hand, when the control unit 1 judges that the settings of switching to telephone communication after facsimile transmission are selected, the control unit 1 commands the communications network control unit 2 to send, from the sound outputting unit 13 to the communication terminal unit, a sound signal indicating that the switching to telephone communication is carried out after the facsimile transmission (S207). Then, the facsimile transmission is carried out (S208).

Regarding the facsimile transmission at S208, facsimile sending is carried out in the case where the facsimile sending start button 12a was pushed at S205, whereas facsimile receiving is carried out in the case where the facsimile receiving start button 12b was pushed at S205.

In the case of sending a facsimile, the image reading unit 3 reads an original image and converts it to image data, then, sends the image data to the modem 6 through the control unit 1. The modem 6 modulates the image data, and sends the image data thus modulated through the communications network control unit 2 and the communications network to the communication terminal unit.

On the other hand, in the case of receiving a facsimile, image data supplied through the communications network from the communication terminal unit is supplied to the modem 6 by the communications network control unit 2, and the modem 6 demodulates the image data. The image data thus demodulated are sent to the printing unit 4 through the control unit 1, and the printing unit 4 prints an image on a sheet of paper based on the demodulated image data.

When the facsimile transmission is completed, the control unit 1 commands the communications network control unit 2 to cause input signals supplied from the communications network to be converted into sound and outputted by the speaker 5 (S210). By doing so, the operator A can monitor signals supplied from the communications network.

Then, the control unit 1 compares a time elapse t since conversion and output of the input signals from the communications network started, which is measured by the clock 15, with a predetermined line signal monitoring period t1 (S212), and carries out the following control.

Until the time elapse t reaches the line signal monitoring period t1, the control unit 1 continues checking whether or not the clear-back detecting unit 10 detects clear-back of the communication terminal unit (S211), and also continues checking whether or not the handset state detecting unit 11 detects that the handset 7 is lifted (S213). In the case where the clear-back detecting unit 10 detects that the communication terminal unit clears the line back before the time elapse t reaches to the line signal monitoring period t1 and before the handset state detecting unit 11 detects that the handset 7 is lifted, the control unit 1 causes the speaker 5 to suspend conversion and output of signals supplied from the communications network, and the operation shifts to a re-dial mode (S215, S216).

Likewise, in the case where the time elapse t reaches to the line signal monitoring period t1, in a state where the handset state detecting unit 11 remains not yet detecting that the handset 7 is lifted and the clear-back detecting unit 10 remains not yet detecting that the communication terminal unit clears the line back, the operation shifts to the re-dial mode (S215, S216).

In the case where the handset state detecting unit 11 detects that the operator A lifts the handset 7 to have telephone communication before the time elapse t reaches the line signal monitoring period t1 and before the clear-back detecting unit 10 detects that the communication terminal unit clears the line back, the control unit 1 causes the speaker 5 to suspend the conversion and output of signals supplied from the communications network, and commands the communications network control unit 2 to connect the handset 7 with the communications network so that the communication shifts to telephone communication (S214).

The operator A confirms that the handset 7 is connected with the communications network, talks with the operator B, and replaces the handset 7 (the handset 7 gets on the hook). Then, as soon as the handset state detecting unit 11 detects that the handset 7 is replaced, the control unit 1 commands the communications network control unit 2 to clear the line forward (S218).

In the re-dial mode, the control unit 1 checks whether or not re-dialing is carried out a set number of times (S215). In the case where the re-dialing has not been carried out the set number of times, the control unit 1 causes the speaker 5 to suspend the conversion and output of the signals supplied from the communications network, and commands the communications network control unit 2 to once clear the line forward so as to be disconnected from the communications network. Thereafter the control unit 1 commands the communications network control unit 2 to hold a line so as to be connected with the communications network, and re-dials the number stored in the memory unit 9 (S216). On the other hand, in the case where the control unit 1 detects that the re-dialing has been carried out the set number of times, the control unit 1 causes the speaker 5 to suspend the conversion and output of the signals supplied from the communications network, and commands the communications network control unit 2 to clear the line forward so as to be disconnected from the communications network (S218). Note that the clock 15 is reset by the control unit 1 as soon as the disconnection from the communications network is carried out.

After the re-dialing step at S216, the control unit 1 checks whether or not the communication terminal unit is a machine exclusively for facsimile communication based on a called station identification signal (CED signal) detected by the modem 6 (S217). In the case where the communication terminal unit is judged to be a machine exclusively for facsimile communication, the control unit 1 commands the communications network control unit 2 to clear the line forward so as to be disconnected from the communications network (S218). On the other hand, in the case where the communication terminal unit is not judged to be a machine exclusively for facsimile communication, the control unit 1 causes the operation to return to S211.

The above operation sequence can be carried out by a facsimile machine resulting on omitting the calling-side/called-side judging unit 14 from the facsimile machine 20 and is arranged so that, after facsimile transmission, a control unit 1 commands a communications network control unit 2 to cause electric signals supplied from the communications network to be converted into sound and outputted by a speaker 5, whether the facsimile machine is a calling side or a called side (this facsimile machine is hereinafter referred to as a first comparative facsimile machine). However, in the case where facsimile transmission is carried out between the first comparative facsimile machines, the following problem occurs.

In the case where facsimile transmission is carried out between the first comparative facsimile machines, signals supplied from the communications network are converted into sound and outputted by the speakers 5 after the completion of the facsimile transmission on the calling and called sides both. Therefore, neither of the facsimile machines on the calling and called sides can send or receive voice to or from the other end. In other words, voice from the other end cannot be heard on both the calling and called sides, to make telephone communication impossible. In addition, since neither of the operators on the calling and called sides can be called up after the end of facsimile transmission, smooth transition to telephone communication may be impossible.

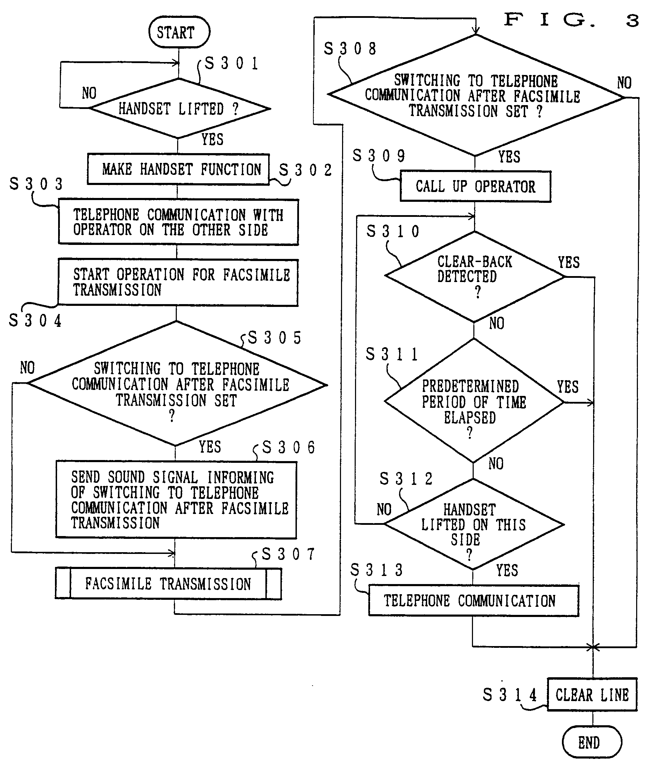

An operation sequence of the facsimile machine 20 in the case where the facsimile machine 20 receives a call and subsequently sends a facsimile will be explained, while referring to a flowchart of Figure 3.

First, when the operator B dials the number of the facsimile machine 20, the communications network control unit 2 detects a terminating call signal, and rings a phone bell so as to call up the operator A. When the operator A lifts the handset 7, the handset state detecting unit 11 checks whether or not the handset 7 is off the hook (S301) and detects that the handset 7 is lifted by the operator A. Then, the control unit 1 commands the communications network control unit 2 to connect the microphone and the speaker of the handset 7 with the communications network, so as to cause the handset 7 to function (S302).

Then, after having telephone communication with the operator B (S303), the operator A replaces the handset 7 and pushes either the facsimile sending start button 12a or the facsimile receiving start button 12b of the facsimile operation button set 12. Then, the communications network control unit 2 connects the modem 6 through the communications network with the communication terminal unit, through a predetermined protocol (S304).

When the modem 6 is connected with the communication terminal unit through the communications network, the control unit 1 checks whether or not the switching to telephone communication after facsimile transmission is set (S305). In the case where the switching is not set, the operation proceeds to facsimile transmission (S307).

On the other hand, in the case where the switching to telephone communication after facsimile transmission is set, the control unit 1 controls the communications network control unit 2 so that the sound outputting unit 13 sends a voice message or alarm in the form of sound signals to the communication terminal unit so as to inform that the switching to telephone communication is to be carried out after the facsimile transmission (S306). Thereafter, the control unit 1 carries out the facsimile transmission (S307). Note that since the step S307 of facsimile transmission is the same as the step S208, explanation of the step S307 is omitted here.

After the facsimile transmission, the control unit 1 checks whether or not the switching to telephone communication is set (S308). In the case where the switching is not set, the control unit 1 commands the communications network control unit 2 to clear the line forward, that is, disconnect the modem 6 from the communications network (S314). On the other hand, in the case where the control unit 1 judges that the switching to telephone communication after the facsimile transmission is set, the control unit 1 commands the speaker 5 to output a ring tone (S309). Subsequently, the control unit 1 compares a time elapse t since the output of the ring tone started, which is measured by the clock 15, with a predetermined ring tone output period t2 (S310), and performs the following control operation.

Until the time elapse t reaches to the ring tone output period t2, the control unit 1 continues checking whether or not the clear-back detecting unit 10 detects that the communication terminal unit clears the line back (S311), while continues checking whether or not the handset state detecting unit 11 detects that the handset 7 is lifted (S312). In the case where the clear-back detecting unit 10 detects that the communication terminal unit clears the line back before the time elapse t reaches the ring tone output period t2 and before the handset state detecting unit 11 detects that the handset 7 is lifted, the control unit 1 causes the speaker 5 to suspend the output of the ring tone, and commands the communications network control unit 2 to clear the line so as to be disconnected from the communications network (S314).

Likewise, in the case where the time elapse t reaches the ring tone output period t2, in a state where the handset state detecting unit 11 remains not yet detecting that the handset 7 is lifted and the clear-back detecting unit 10 remains not yet detecting that the communication terminal unit clears the line back, the control unit 1 causes the speaker 5 to suspend the output of the ring tone, and commands the communications network control unit 2 to clear the line forward so as to be disconnected from the communications network (S314).

In the case where the handset state detecting unit 11 detects that the operator A lifts the handset 7 to make a call before the time elapse t reaches the ring tone output period t2 and before the clear-back detecting unit 10 detects that the communication terminal unit clears the line back, the control unit 1 causes the speaker 5 to suspend the output of the ring tone, and commands the communications network control unit 2 to connect the handset 7 with the communications network so that the communication shifts to telephone communication (S313).

The operator A confirms that the handset 7 is connected with the communications network, talks with the operator B, and replaces the handset 7 (the handset 7 gets on the hook). Then, as soon as the handset state detecting unit 11 detects that the handset 7 is replaced, the control unit 1 commands the communications network control unit 2 to clear the line forward so as to be disconnected from the communications network (S314).

The above operation sequence can be carried out by a facsimile machine resulting on omitting the calling-side/called-side judging unit 14 from the facsimile machine 20 and is arranged so that, after facsimile transmission, a control unit 1 commands a speaker 5 to output a ring tone, whether the facsimile machine is a calling side or a called side (this facsimile machine is hereinafter referred to as a second comparative facsimile machine). However, in the case where facsimile transmission is carried out between the second comparative facsimile machines, the following problem occurs.

In the case where facsimile transmission is carried out between the second comparative facsimile machines, ring tones are outputted after the completion of the facsimile communication on the calling and called sides both. Therefore, in the case where either of the operators on the calling and called sides immediately lifts the handset 7 after the completion of the facsimile transmission while the other fails to do so because being apart from the facsimile machine, the former operator has to wait with the handset 7 in the hand until the latter operator lifts the handset 7 and starts to talk. Thus, in this case, such inconvenience occurs to the operators.

Besides, in the case where facsimile transmission is carried out between the second comparative facsimile machines, both the facsimile machines on the calling and called sides output ring tones after the facsimile transmission. Therefore, after the line is cleared by the machine on the called side, the handset of the machine on the called side may be lifted by the operator before the machine on the calling side re-dials, and this may make it impossible to detect, on re-dialing, whether or not the facsimile machines on the calling and called sides are connected.

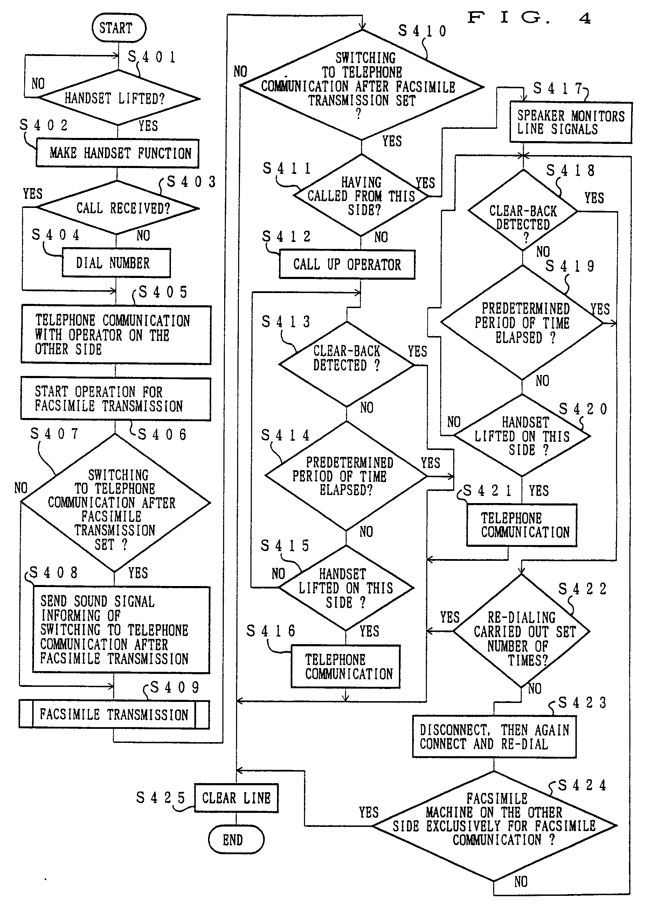

Referring to a flowchart of Figure 4, the following description will explain an operation of the facsimile machine 20 which carries out facsimile transmission following to calling or receiving a call, and controls output of the speaker 5 depending on whether it is a calling side or a called side.

The calling-side/called-side judging unit 14 judges whether or not a call signal is inputted to the communications network control unit 2, and in the case where the call signal is detected, the control unit 1 rings a bell tone for calling up the operator A. Then, the handset state detecting unit 11 checks whether or not the handset 7 is lifted (S401). In the case where the handset state detecting unit 11 detects that the handset 7 is lifted by the operator A, the control unit 1 commands the communications network control unit 2 to connect the microphone and the speaker of the handset 7 with the communications network, so that the handset 7 functions (S402).

Subsequently, it is checked whether the operator A is receiving a call or making a call (S403), and in the case of receiving a call, the operator A talks with the operator B (S405). In the case of making a call, the operator A dials the number of the communication terminal unit by using the dial button set 8 (S404), and talks with the operator B (S405).

When the operator A pushes either the facsimile sending start button 12a or the facsimile receiving start button 12b after replacing the handset 7 so as to finish the telephone communication, the communications network control unit 2 connects the modem 6 with the communication terminal unit through the communications network by the predetermined protocol (S406).

When the modem 6 is connected with the communication terminal unit through the communications network, the control unit 1 checks whether or not the switching to telephone communication after the facsimile transmission is set (S407). In the case where the switching to telephone communication after the facsimile transmission is not set, only the facsimile communication is carried out (S409).

On the other hand, in the case where the switching to telephone communication after the facsimile transmission is set, the control unit 1 commands the communications network control unit 2 to send, from the sound outputting unit 13 to the communication terminal unit, a sound signal informing that the switching to telephone communication is to be carried out after the facsimile transmission (S408), and subsequently carries out the facsimile transmission (S409). Note that since the facsimile transmission at S409 is the same as the facsimile transmission at S208, the explanation is omitted here.

When the facsimile transmission is completed, the control unit 1 checks whether or not the switching to telephone communication after the facsimile transmission is set (S410). In the case where the switching to telephone communication after facsimile transmission is not set, the control unit 1 commands the communications network control unit 2 to clear the line so that the modem 6 becomes disconnected from the communications network (S425). On the other hand, in the case where the switching to telephone communication after facsimile transmission is set, the control unit 1 checks whether the facsimile machine 20 is a calling side or a called side, based on judgement by the calling-side/called-side judging unit 14 (S411).

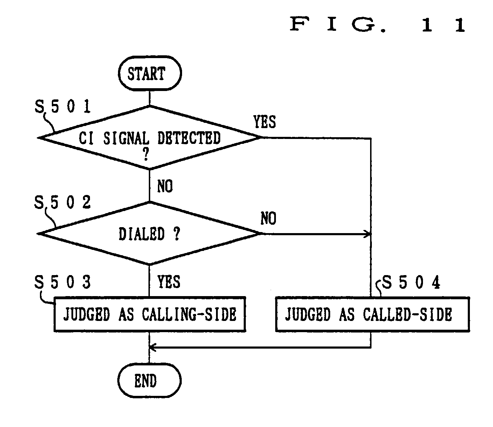

Before the facsimile transmission, the calling-side/called-side judging unit 14 judges whether or not the call signal (CI signal) of 16Hz, which is a bell tone, was sent to the communications network control unit 2 before the step of S401, as illustrated in Figure 11 (S501). In the case where the call signal is detected, the calling-side/called-side judging unit 14 judges that the facsimile machine 20 is a called side (S504). On the other hand, in the case where the call signal is not detected, the calling-side/called-side judging unit 14 judges whether or not a phone number was dialed at the step of S404 (S502). In the case where a phone number was dialed, the calling-side/called-side judging unit 14 judges that the facsimile machine 20 is a calling side (S503). In the case where any phone number was not dialed, the calling-side/called-side judging unit 14 judges that the facsimile machine 20 is a called side (S504).

In the case where the facsimile machine 20 is judged as called side, the control unit 1 commands the speaker 5 to output a ring tone (S412). Then, the control unit 1 compares a time elapse t since the output of the ring tone started, which is measured by the clock 15, with a predetermined ring tone output period t2 (S414), and performs the following control operation.

Until the time elapse t reaches the ring tone output period t2, the control unit 1 continues checking whether or not the clear-back detecting unit 10 detects that the communication terminal unit clears the line back (S413), while continues checking whether or not the handset state detecting unit 11 detects that the handset 7 is lifted (S415). In the case where the clear-back detecting unit 10 detects that the communication terminal unit clears the line back before the time elapse t reaches the ring tone output period t2 and before the handset state detecting unit 11 detects that the handset 7 is lifted, the control unit 1 causes the speaker 5 to suspend the output of the ring tone, and commands the communications network control unit 2 to clear the line forward so as to be disconnected from the communications network (S425).

Likewise, in the case where the time elapse t reaches the ring tone output period t2 in a state where the handset state detecting unit 11 remains not yet detecting that the handset 7 is lifted and the clear-back detecting unit 10 remains not yet detecting that the communication terminal unit clears the line back, the control unit 1 causes the speaker 5 to suspend the output of the ring tone, and commands the communications network control unit 2 to clear the line forward so as to be disconnected from the communications network (S425).

In the case where the handset state detecting unit 11 detects that the operator A lifts the handset 7 to have telephone communication before the time elapse t reaches the ring tone output period t2 and before the clear-back detecting unit 10 detects that the communication terminal unit clears the line back, the control unit 1 causes the speaker 5 to suspend the output of the ring tone, and commands the communications network control unit 2 to connect the handset 7 with the communications network so that the communication shifts to telephone communication (S416).

The operator A confirms that the handset 7 is connected with the communications network, talks with the operator B, and replaces the handset 7 (the handset 7 gets on the hook). Then, as soon as the handset state detecting unit 11 detects that the handset 7 is replaced, the control unit 1 commands the communications network control unit 2 to clear the line forward so as to be disconnected from the communications network (S425).

In the case where at S411 the facsimile 20 is judged as called side, the control unit 1 commands the communications network control unit 2 to cause signals supplied from the communications network to be converted into sound and outputted by the speaker 5 (S417). Then, the control unit 1 compares a time elapse t since conversion and output of the signals supplied from the communications network started, which is measured by the clock 15, with a predetermined line signal monitoring period t1 (S419), and the following control is carried out.

Until the time elapse t reaches the line signal monitoring period t1, the control unit 1 continues checking whether or not the clear-back detecting unit 10 detects that the communication terminal unit clears the line back (S418), and also continues checking whether or not the handset state detecting unit 11 detects that the handset 7 is lifted (S420). In the case where the clear-back detecting unit 10 detects that the communication terminal unit clears the line back before the time elapse t reaches the line signal monitoring period t1 and before the handset state detecting unit 11 detects that the handset 7 is lifted, the control unit 1 causes the speaker 5 to suspend conversion and output of signals supplied from the communications network, and the operation shifts to a re-dial mode (S422, S423).

Likewise, in the case where the time elapse t reaches the line signal monitoring period t1, in a state where the handset state detecting unit 11 remains not yet detecting that the handset 7 is lifted and the clear-back detecting unit 10 remains not yet detecting that the communication terminal unit clears the line back, the operation shifts to the re-dial mode (S422, S423).

In the case where the handset state detecting unit 11 detects that the operator A lifts the handset 7 to have telephone communication before the time elapse t reaches the line signal monitoring period t1 and before the clear-back detecting unit 10 detects that the communication terminal unit clears the line back, the control unit 1 causes the speaker 5 to suspend the conversion and output of signals supplied from the communications network, and commands the communications network control unit 2 to connect the handset 7 with the communications network so that the communication shifts to telephone communication (S421).

The operator A confirms that the handset 7 is connected with the communications network, talks with the operator B, and replaces the handset 7 (the handset 7 gets on the hook). Then, as soon as the handset state detecting unit 11 detects that the handset 7 is replaced, the control unit 1 commands the communications network control unit 2 to clear the line forward so as to be disconnected from the communications network (S425).

In the re-dial mode, the control unit 1 checks whether or not re-dialing is carried out a set number of times (S422). In the case where the re-dialing has not been carried out the set number of times, the control unit 1 causes the speaker 5 to suspend the conversion and output of the signals from the communications network, and commands the communications network control unit 2 to once clear the line forward so as to be disconnected from the communications network. Thereafter the control unit 1 commands the communications network control unit 2 to hold a line so as to be connected with the communications network, and re-dials the number stored in the memory unit 9 (S423). On the other hand, in the case where the control unit 1 detects that the re-dialing has been carried out the set number of times, the control unit 1 causes the speaker 5 to suspend the conversion and output of the signals supplied from the communications network, and commands the communications network control unit 2 to clear the line forward so as to be disconnected from the communications network (S425).

After the re-dialing step at S423, the control unit 1 checks whether or not the communication terminal unit is a machine exclusively for facsimile communication based on the called station identification signal (CED signal) of the communication terminal unit detected by the modem 6 (S424). In the case where the communication terminal unit is judged to be a machine exclusively for facsimile communication, the control unit 1 commands the communications network control unit 2 to clear the line forward so as to be disconnected from the communications network (S425). On the other hand, in the case where the communication terminal unit is not judged to be a machine exclusively for facsimile communication, the control unit 1 causes the operation to return to S418.

Thus, the facsimile machine 20 is arranged so that, after facsimile transmission, based on the judgement by the calling-side/called-side judging unit 14, the control unit 1 causes the speaker 5 to convert signals supplied from the communications network into sound in the case the facsimile machine 20 is a calling side, while causes the speaker 5 to output a ring tone in the case where the facsimile machine 20 is a called side.

Therefore, in the case where facsimile transmission is conducted between the facsimile machines 20, signals supplied from the communications network are converted into sound and outputted by the speaker 5 in the terminal unit on the calling side (the facsimile machine 20 on the calling side), while a ring tone is outputted by the speaker 5 in the terminal unit on the called side (the facsimile machine 20 on the called side).

By doing so, even though being away from the terminal unit, the operator on the called side is called up by the ring tone and lifts the handset 7 after facsimile transmission, immediately shifting to telephone communication.

In the case where the operator on the calling side is near the terminal unit while the operator on the called side is away from the terminal unit, the operator on the calling side has to wait until the operator on the called side lifts the handset 7 and starts speaking. However, with the aforementioned arrangement wherein signals supplied from the communications network are converted into sound and outputted by the speaker 5 after the facsimile transmission ends, voice can be heard through the speaker 5 in the case where the operator on the other side needs to talk, and tones of a clear-back signal from the communications network can be heard in the case where the communication is stopped by the operator on the other side. Therefore, the operator on the calling side may lift the handset 7 only when he/she, by hearing voice reproduced by the speaker 5, confirms that the operator on the called side attempts to talk. In other words, there is no need to wait with the handset 7 in hand.

Besides, the facsimile machine 20 of the present embodiment is arranged so that in the case where the handset 7 is lifted and an operation for starting telephone communication is conducted while the signals supplied from the communications network are converted into sound and outputted by the speaker 5, or while the ring tone for calling up the operator is outputted by the speaker 5, the control unit 1 stops a timer, i.e., stops control for clearing the line when the period of time t reaches the predetermined value. With this arrangement, the facsimile machine 20 and the communications network are not disconnected even though the handset 7 is lifted and the operation for telephone communication is carried out.

Furthermore, the facsimile machine 20 of the present embodiment has the sound outputting unit 13 which sends sound signals indicating that switching to telephone communication is to be conducted after facsimile transmission, to the terminal unit on the other side, before the facsimile transmission is carried out. With this arrangement, the operator does not have to bother to inform the operator on the other side before facsimile transmission that the communication will be switched to telephone communication after facsimile transmission.

Moreover, the facsimile machine 20 of the present embodiment has an automatic re-dialing function. Therefore, in the case where the facsimile machine 20 as calling side dials a specific phone number, an automatic re-dial step as follows is repeated a predetermined number of times: through the automatic re-dial step, a line connected with the communications network is once cleared, then, again held, and the same phone number is dialed. With this function, the operator does not have to bother to re-dial in the case where the communication with the operator on the other side is failed.

In addition, the facsimile machine 20 of the present embodiment is arranged so that in the case where it is detected during the re-dialing operation that the communication terminal unit on the other side is a machine exclusively for the facsimile use, the facsimile machine 20 is disconnected from the communications network. Therefore, it is avoidable that the facsimile machine unnecessarily remains connected with the communications network.

Provided that the facsimile machine 20 is arranged so that the telephone number of the communication terminal unit on the other side can be detected by the use of signals from the network or from the communication terminal unit, it is possible to arrange the facsimile machine 20 so as to automatically once become disconnected from the communications network and then, become connected again, and dial the telephone number, even in the case where the facsimile machine 20 is a called side. With this arrangement, the operator does not have to bother to redial in the case where the communication with the operator on the other side is failed.

It is also possible to replace the calling-side/called-side judging unit (first judging means) 14 in the facsimile machine 20 with a sender/receiver judging unit (second judging means) 14' for judging whether a facsimile is sent or received. With this arrangement, the same effect as that of the facsimile machine 20 can be obtained.

Furthermore, though the facsimile machine 20 has the speaker 5 in which the ring tone outputting means and the line signal monitoring means are integrated, the ring tone outputting means and the line signal monitoring means may be separately provided.

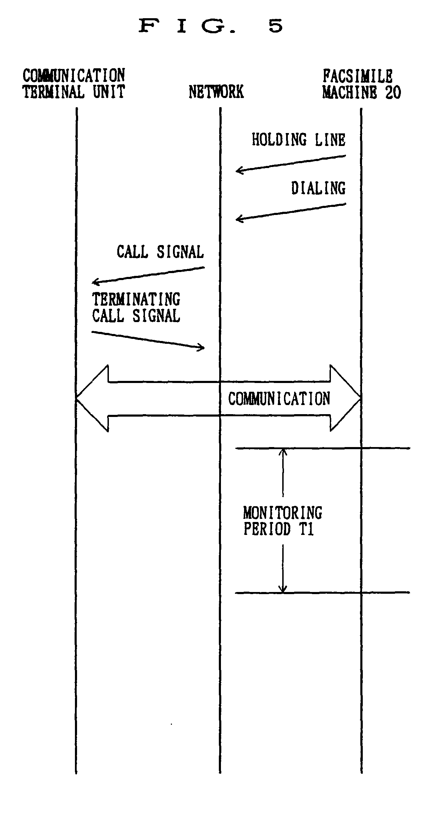

Finally, the following description will explain a protocol for communication between the facsimile machine 20 and the communication terminal unit, while referring to Figures 5 through 10.

A protocol in the case where signals supplied from the communications network are converted into sound and outputted by the speaker 5 is explained below, with reference to Figure 5.

In the facsimile machine 20, the signals supplied from the communications network are converted into sound and outputs them by the speaker 5, during a predetermined monitoring period T1 of the line signal monitoring period t1, after facsimile transmission in the case where the facsimile machine 20 is a called side.

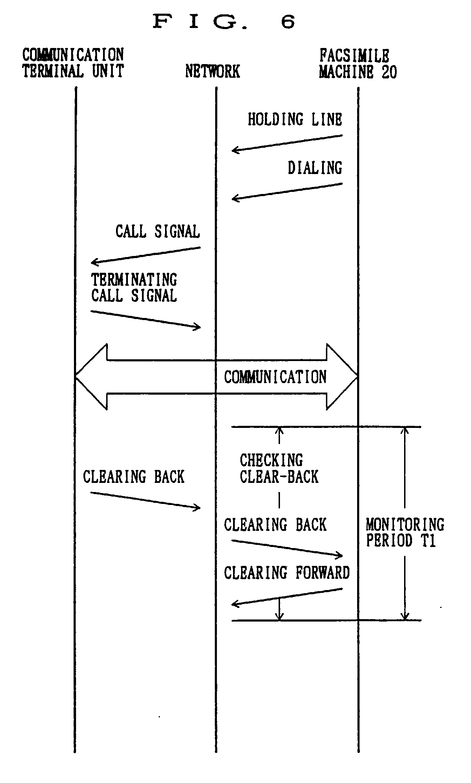

A protocol in the case where the communication terminal unit clears the line back during the monitoring period T1 is explained, with reference to Figure 6.

In the facsimile machine 20, the clear-back detecting unit 10 checks whether or not the communication terminal unit clears the line back, during the monitoring period T1 after facsimile transmission in the case where the facsimile machine 20 is a calling side. In the case where it is detected by the clear-back detecting unit 10 that the communication terminal unit clears the line back and becomes disconnected from the communication network, the speaker 5 is caused to suspend conversion of the signals into sound and output of the sound, and the facsimile machine 20 becomes disconnected from the communication network.

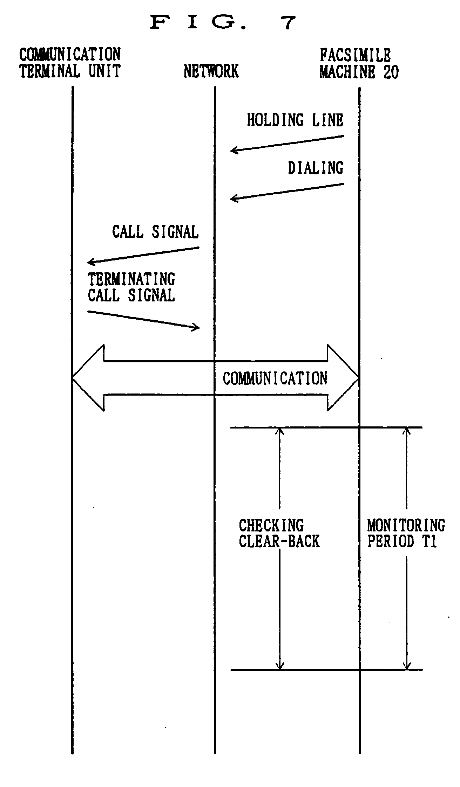

A protocol in the case where the communication terminal unit does not clear the line back during the monitoring period T1 is explained below, with reference to Figure 7.

In the facsimile machine 20, the clear-back detecting unit 10 checks whether or not the communication terminal unit clears the line back, during the monitoring period T1 after facsimile transmission in the case where the facsimile machine 20 is a calling side. In the case where the communication terminal unit does not clear the line, the facsimile machine 20 converts signals supplied from the communications network into sound and outputs the sound, by the use of the speaker 5.

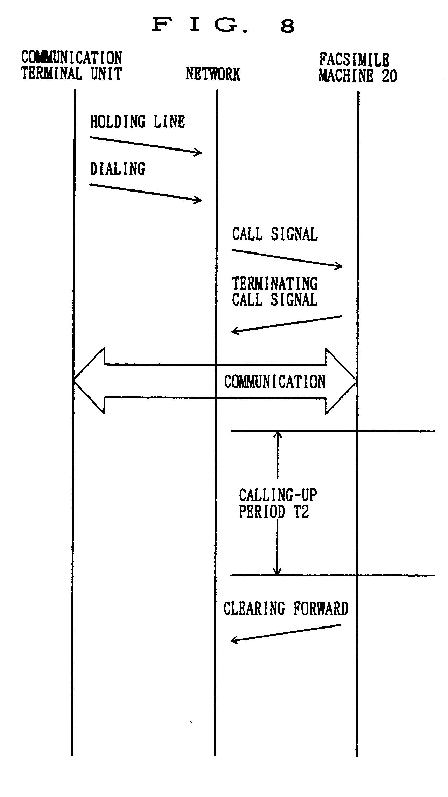

A protocol in the case where the ring tone is outputted after facsimile transmission is explained below, with reference to Figure 8.

In the facsimile machine 20, the speaker 5 outputs a ring tone so as to call up the operator A, during a predetermined calling-up period T2 of the ring tone outputting period t2, after facsimile transmission in the case where the facsimile machine 20 is called by the communication terminal unit.

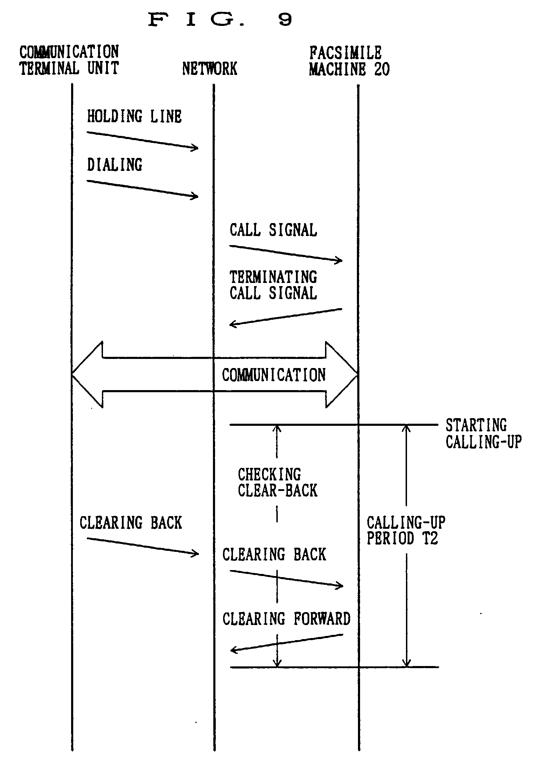

A protocol in the case where the communication terminal unit clears the line back during the calling-up period T2 and clears the line is explained below, with reference to Figure 9.

In the facsimile machine 20, the clear-back detecting unit 10 checks whether or not the communication terminal unit clears the line back, during a predetermined calling-up period T2 after facsimile transmission in the case where the facsimile machine 20 is called by the communication terminal unit. In the case where the communication terminal unit does not clear the line back, the speaker 5 outputs a ring tone for the ring tone outputting period t2. On the other hand, in the case where the communication terminal unit clears the line thereby disconnecting from the communication network during the calling-up period T2, the facsimile machine 20 stops the output of the ring tone, and clears the line forward.

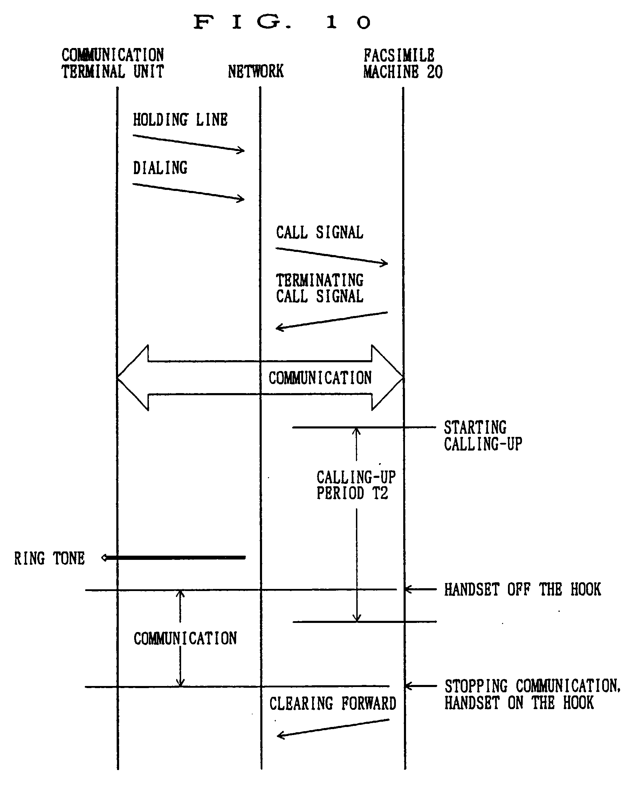

A protocol in the case where the operator A lifts up the handset 7 so as to replay the call during the calling-up period T2 is explained below, with reference to Figure 10.

In the facsimile machine 20, the clear-back detecting unit 10 checks whether or not the communication terminal unit clears the line back, during a predetermined calling-up period T2 after facsimile transmission in the case where the facsimile machine 20 is called by the communication terminal unit. In the case where the communication terminal unit does not clear the line back, the speaker 5 outputs a ring tone for the ring tone outputting period t2. On the other hand, in the case where the operator A lifts up the handset 7 (the handset 7 gets off the hook) so as to replay the call during the calling-up period T2, the output of the ring tone is suspended and the communication shifts to telephone communication.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A facsimile machine for performing facsimile transmission with a facsimile terminal unit through a line, said facsimile machine comprising:
telephone communication means for sending and receiving sound through the line;
first judging means for judging before facsimile transmission whether said facsimile machine is a calling side or a called side;
ring tone outputting means for outputting a ring tone so as to call up an operator of said facsimile machine;
line signal monitoring means for converting electric signals supplied from the line into sound and outputting the sound; and
control means for controlling said line signal monitoring means and said ring tone outputting means so as to selectively cause the electric signals supplied from the line to be converted into sound and outputted by said line signal monitoring means after the facsimile transmission, or cause the ring tone to be outputted by said ring tone outputting means after the facsimile transmission, depending on judgement by said first judging means.

2. A facsimile machine as set forth in claim 1, further comprising:
clear-back detecting means for detecting it when the facsimile terminal unit in communication with said facsimile machine clears the line back,
wherein in the case where said clear-back detecting means detects that the facsimile terminal unit clears the line back while said control means causes said line signal monitoring means to convert the signals supplied from the line into sound and output the sound, said control means causes said line signal monitoring means to suspend the output of the tones, and clears the line forward.

3. A facsimile machine as set forth in claim 1, further comprising:
clear-back detecting means for detecting it when the facsimile terminal unit in communication with said facsimile machine clears the line back,
wherein in the case where said clear-back detecting means detects that the facsimile terminal unit clears the line back while said control means causes said ring tone outputting means to output the ring tone, said control means causes said ring tone outputting means to suspend the output of the ring tone, and clears the line forward.

4. A facsimile machine as set forth in claim 1, further comprising:
time measuring means for measuring a time elapse since the output of sound by said line signal monitoring means started,
wherein said control means causes said line signal monitoring means to suspend the output of the sound and clears the line forward, when the time elapse reaches a predetermined period of time.

5. A facsimile machine as set forth in claim 1, further comprising:
time measuring means for measuring a time elapse since the output of the ring tone by said ring tone outputting means started,
wherein said control means causes said ring tone outputting means to suspend the output of the ring tone and clears the line, when the time elapse reaches a predetermined period of time.

6. The facsimile machine as set forth in claim 1, wherein said telephone communication means is a handset provided so as to get on and off a hook in a main body of said facsimile machine.

7. A facsimile machine as set forth in claim 6, further comprising:
handset state detecting means for detecting whether said handset is provided so as to get on and off the hook in a main body of said facsimile machine,
wherein, when said handset state detecting means detects that said handset gets off the hook while the signals supplied from the communications network are converted into sound and outputted by said line signal monitoring means, said control means causes said line signal monitoring means to suspend the output of the sound and connects said handset with the line.

8. A facsimile machine as set forth in claim 6, further comprising:
handset state detecting means for detecting whether said handset is on or off the hook of the main body of said facsimile machine,
wherein, when said handset state detecting means detects that said handset gets off the hook of said facsimile machine while the ring tone is outputted by said ring tone outputting means, said control means causes said ring tone outputting means to suspend the output of the ring tone and connects said handset with the line.

9. A facsimile machine as set forth in claim 1, further comprising:
sound outputting means for sending a sound signal to the facsimile terminal unit in communication with said facsimile machine, the sound signal informing that the communication is to be switched to telephone communication after the facsimile transmission.

10. A facsimile machine as set forth in claim 1, further comprising:
memory means for storing a telephone number of the facsimile terminal unit,
wherein said control means re-dials the telephone number after the line is cleared.

11. The facsimile machine as set forth in claim 1, wherein said clear-back detecting means detects that the communication terminal unit in communication with said facsimile machine clears the line back, by detecting a busy tone.

12. A facsimile machine for performing facsimile transmission with a facsimile terminal unit through a line, said facsimile machine comprising:
telephone communication means for sending and receiving sound through the line;
second judging means for judging whether said facsimile machine has sent a facsimile or has received a facsimile;
ring tone outputting means for outputting a ring tone so as to call up an operator of said facsimile machine;
line signal monitoring means for converting electric signals supplied from the line into sound and outputting the sound; and
control means for controlling said line signal monitoring means and said ring tone outputting means so as to selectively cause the electric signals supplied from the line to be converted into sound and outputted by said line signal monitoring means after the facsimile transmission, or cause the ring tone to be outputted by said ring tone outputting means after the facsimile transmission, depending on judgment by said second judging means.
